# EUROPEAN PATENT APPLICATION

(11) **EP 4 741 465 A1**
(43) Date of publication of application: **13.05.2026**
(21) Application number: 24945226.9
(22) Date of filing: 21.08.2024
(51) Int. Cl.: C09D 163/00, C09D 5/08, C09D 7/61, C09D 7/63, C09D 7/65, B05D 7/14, C08G 83/00

(54) **ANTI-CORROSION COATING, PREPARATION METHOD THEREFOR, AND USE THEREOF, AND COATED PRODUCT**

(30) Priority: 18.06.2024 CN 202410792638; 18.06.2024 CN 202410792625
(71) Applicant: Wuhu Midea Kitchen And Bath Appliances MFG. Co., Ltd., Wuhu, Anhui 241009 (CN)
(72) Inventor: LIN, Yong, Wuhu, Anhui 241009 (CN); ZHAO, Li, Wuhu, Anhui 241009 (CN); ZOU, Yongkun, Wuhu, Anhui 241009 (CN); MING, Keyu, Wuhu, Anhui 241009 (CN); ZHENG, Binming, Wuhu, Anhui 241009 (CN); LI, Zhonghua, Wuhu, Anhui 241009 (CN); LIU, Xiaowen, Wuhu, Anhui 241009 (CN)
(74) Representative: RGTH
(86) International application number: PCT/CN2024/113625
(87) International publication number: WO 2025/260494

(57) **Abstract**

The present application provides an anti-corrosion coating, a preparation method and use thereof, and a coated product. Raw material components of the anti-corrosion coating include, based on parts by weight, 30 to 44 parts of epoxy resin and 1 to 10 parts of an azole-functionalized metal-organic framework material.

## Description

### CROSS-REFERENCE TO RELATED APPLICATIONS

This application claims priority to Chinese Patent Application No. 202410792638.7, entitled "ANTI-CORROSION COATING, PREPARATION METHOD AND USE THEREOF, AND COATED PRODUCT" and filed on June 18, 2024, and Chinese Patent Application No. 202410792625.X, entitled "ANTI-CORROSION COATING, PREPARATION METHOD AND USE THEREOF, AND COATED PRODUCT" and filed on June 18, 2024. The disclosures of the aforementioned applications are hereby incorporated by reference in their entireties.

### FIELD

The present disclosure relates to the technical field of anti-corrosion materials, and particularly, to an anti-corrosion coating, a preparation method and use thereof, and a coated product.

### BACKGROUND

In applications of metallic materials, corrosion of material surfaces and metallic components may cause incalculable losses. Therefore, it is particularly important to provide the metallic surfaces with an anti-corrosion coating layer of high-performance and long-term stability. Currently, the primary technical means involves constructing anti-corrosion coating polymer layers on the metallic surfaces. It is an effective solution to construct a highly efficient and dense cross-linked network in a resin system and introduce micro-nano scale fillers to synergistically improve the coating layers in terms of water vapor permeability resistance, moisture and heat resistance, stability, etc. It has been reported that efficient anti-corrosion effects can be achieved by introducing flaky fillers (such as graphite, graphene), micro-nano particle materials (such as nano-silica, metal oxide particles, wollastonite), etc., into resin materials such as E12 epoxy resin and polyester. For example, Chinese Patent Application CN 112409884 A discloses a coating prepared by introducing graphene oxide-ferroferric oxide nanoparticles into epoxy resin, which has a dual anti-corrosion effect combining surface super-hydrophobicity with graphene barrier effect. Chinese Patent Application CN 109957308 A discloses an anti-corrosion coating layer using epoxy resin as a film-forming substance, aluminum sulfate and polyaniline as adjuvants, and using aluminum sulfate and graphene as fillers, which can prevent infiltration of corrosive media and achieve excellent physical barrier and anti-corrosion capabilities of the anti-corrosion coating layer.

However, the means of applying or spraying the anti-corrosion coating layers on the metallic surfaces exerts the anti-corrosion effect mainly through the physical barrier actions. However, for the passive anti-corrosion coating layer that merely relies on the physical barriers, it is difficult to meet long-term service requirements of metals in harsh environment, even if the micro-nano fillers are introduced into the coating materials. When the metals are used in high-temperature and high-humidity environment for long term, the presence of water vapor, corrosive ionic media, etc., which diffuse and migrate for a long period of time, can easily lead to defects such as bubbling, cracking, and perforation in some local weak regions of the anti-corrosion coating layers in case of poorly localized dispersion of the fillers, leading to localized corrosion. Thus, the anti-corrosion of the coating layers may be ineffective and the service life of the metals may be shortened. Moreover, the polymer resin system cannot completely block permeation of the water vapor. At the same time, the resin coating layers also have problems such as poor anti-aging performance and low mechanical strength. Under long-term hot water erosion and stress, the resin coating layers tend to crack, thereby providing channels for diffusion of water and ions, which further leads to the corrosion of metallic substrates. Such a process, to a certain extent, limits long-term applications of the resin-based anti-corrosion coating layers in long-term hot and humid environment.

Therefore, it is urgent to provide a coating material that can be applied for a long time in hot and humid environment and has good corrosion resistance and an excellent anti-corrosion effect.

### SUMMARY

The present disclosure aims to solve at least partially one of the technical problems in the related art. To this end, the present disclosure provides an anti-corrosion coating, a preparation method and use thereof, and a coated product.

In a first aspect, the present disclosure provides an anti-corrosion coating. Raw material components of the anti-corrosion coating comprise, based on parts by weight, 30 to 44 parts of epoxy resin and 1 to 10 parts of an azole-functionalized metal-organic framework material.

In some embodiments of the present disclosure, the raw material components of the anti-corrosion coating further comprise, based on parts by weight, 1 to 12 parts of a curing agent, 1 to 28 parts of a filler, and 0.1 to 1 part of an adjuvant.

In some embodiments of the present disclosure, the raw material components of the anti-corrosion coating comprise, based on parts by weight, 40 to 44 parts of epoxy resin, 5 to 8 parts of the azole-functionalized metal-organic framework material, 8 to 10 parts of the curing agent, 23 to 26 parts of the filler, and 0.5 to 0.8 parts of the adjuvant.

In some embodiments of the present disclosure, the epoxy resin is selected from at least one of bisphenol A epoxy resin, phenolic epoxy resin, bisphenol F epoxy resin, or bisphenol S epoxy resin.

In some embodiments of the present disclosure, the azole-functionalized metal-organic framework material is selected from at least one of benzotriazole-metal-organic framework material (BTA-MOF), methylbenzotriazole-metal-organic framework material (TTA-MOF), benzothiazole-metal-organic framework material (Benzothiazole-MOF), or 2-mercaptobenzothiazole-metal-organic framework material (MBT-MOF).

In some embodiments of the present disclosure, the azole-functionalized metal-organic framework material is a benzotriazole-metal-organic framework material (BTA-MOF).

In some embodiments of the present disclosure, the curing agent is selected from at least one of imidazole, phenylenediamine, diaminodiphenylmethane, aromatic amine E, m-phenylenediamine, or polyamide.

In some embodiments of the present disclosure, the filler is selected from at least one of talc powder, carbon black, silica, titanium dioxide, mica powder, wollastonite powder, ceramic powder, or glass flakes.

In some embodiments of the present disclosure, the adjuvant is selected from at least one of a defoamer, a leveling agent, a thixotropic agent, a coupling agent, an anti-settling agent, or a dispersant.

In a second aspect, the present disclosure provides a method for preparing the anti-corrosion coating as described above. The method comprises the following steps.

In S100, a Zn-metal-organic framework material is synthesized using a hydrothermal process.

In S200, the azole-functionalized metal-organic framework material is synthesized by adding an azole ligand is added to the Zn-metal-organic framework material for a reaction.

In S300, the azole-functionalized metal-organic framework material is uniformly mixed with the epoxy resin, and melt-extrusion and sieving are performed on the mixture, to obtain the anti-corrosion coating.

In some embodiments of the present disclosure, the azole-functionalized metal-organic framework material, the epoxy resin, the curing agent, the filler, and the adjuvant are uniformly mixed, and melt-extrusion and sieving are performed on the mixture, to obtain the anti-corrosion coating.

In some embodiments of the present disclosure, parts by weight of the azole-functionalized metal-organic framework material, epoxy resin, the curing agent, the filler, and the adjuvant are as follows: 30 to 44 parts of the epoxy resin, 1 to 10 parts of the azole-functionalized metal-organic framework material, 1 to 12 parts of the curing agent, 1 to 28 parts of the filler, and 0.1 to 1 part of the adjuvant.

In some preferred embodiments of the present disclosure, parts by weight of the azole-functionalized metal-organic framework material, epoxy resin, the curing agent, the filler, and the adjuvant are as follows: 40 to 44 parts of the epoxy resin, 5 to 8 parts of the azole-functionalized metal-organic framework material, 8 to 10 parts of the curing agent, 23 to 26 parts of the filler, and 0.5 to 0.8 parts of the adjuvant.

In some embodiments of the present disclosure, said synthesizing the Zn-metal-organic framework material using the hydrothermal process comprises: dissolving zinc nitrate and 2-thiophenecarboxylic acid in a mixed solution of water and methanol; adding sodium hydroxide, followed by 4,4'-bipyridine, into the mixed solution, uniformly mixing, and placing the mixture in a hydrothermal reactor for a reaction at 100°C to 150°C for 8 hours to 16 hours; and washing and drying, subsequent to the complete reaction, the obtained solid to obtain the Zn-metal-organic framework material.

In some embodiments of the present disclosure, said synthesizing the azole-functionalized metal-organic framework material comprises: dispersing the Zn-metal-organic framework material in methanol, and adding the azole ligand for a reaction at 40°C to 70°C for 8 hours to 13 hours; and washing and drying, subsequent to the complete reaction, the obtained solid to obtain the azole-functionalized metal-organic framework material.

In some embodiments of the present disclosure, the azole ligand comprises at least one of benzotriazole ligand, methylbenzotriazole ligand, 2-mercaptobenzothiazole ligand, benzimidazole ligand, or benzothiazole ligand.

In some embodiments of the present disclosure, the azole-functionalized metal-organic framework material is selected from at least one of benzotriazole-metal-organic framework material (BTA-MOF), methylbenzotriazole-metal-organic framework material (TTA-MOF), benzothiazole-metal-organic framework material (Benzothiazole-MOF), or 2-mercaptobenzothiazole-metal-organic framework material.

In some embodiments of the present disclosure, the azole ligand is a benzotriazole (BTA) ligand, and the prepared azole-functionalized metal-organic framework material is a benzotriazole-metal-organic framework material (BTA-MOF).

In a third aspect, the present disclosure provides use of the anti-corrosion coating as described above or the anti-corrosion coating prepared by the method as described above in anti-corrosion of a metallic substrate.

In some embodiments of the present disclosure, the metallic substrate comprises an elemental metal or a metallic alloy.

In a fourth aspect, the present disclosure provides an anti-corrosion coating layer. The anti-corrosion coating layer is obtained by uniformly coating, by means of electrostatic spraying, and curing the anti-corrosion coating as described above or the anti-corrosion coating prepared by the method as described above on a surface of a metallic substrate.

In some embodiments of the present disclosure, the metallic substrate comprises an elemental metal or a metallic alloy.

In a fifth aspect, the present disclosure provides a coated product. The coated product comprises a metallic substrate and the anti-corrosion coating as described above or the anti-corrosion coating prepared by the method as described above, coated on the metallic substrate.

In some embodiments of the present disclosure, the metallic substrate comprises an elemental metal or a metallic alloy.

**In** a sixth aspect, the present disclosure provides an anti-corrosion coating. Raw material components of the anti-corrosion coating comprise, based on parts by weight, 30 to 44 parts of epoxy resin and 1 to 10 parts of a composite corrosion inhibitor. The composite corrosion inhibitor comprises a Zn-metal-organic framework material. The composite corrosion inhibitor further comprises at least one of thiourea compound and inorganic corrosion inhibitor.

**In** some embodiments of the present disclosure, the raw material components of the anti-corrosion coating comprise, based on parts by weight, 1 to 4 parts of the Zn-metal-organic framework material, 0.4 to 2 parts of the thiourea compound, and 1 to 4 parts of inorganic corrosion inhibitor.

In some embodiments of the present disclosure, the thiourea compound is selected from at least one of thiourea, acylthiourea, thiosemicarbazide, or thiosemicarbazone.

In some embodiments of the present disclosure, the inorganic corrosion inhibitor is selected from at least one of silicate, molybdate, or tungstate.

In some embodiments of the present disclosure, the corrosion inhibitor is selected from at least one of sodium silicate, sodium molybdate, or sodium tungstate.

In some embodiments of the present disclosure, the epoxy resin is selected from at least one of bisphenol A epoxy resin, phenolic epoxy resin, bisphenol F epoxy resin, or bisphenol S epoxy resin.

In some embodiments of the present disclosure, the raw material components of the anti-corrosion coating further comprise, based on parts by weight: 1 to 12 parts of a curing agent, 1 to 28 parts of a filler, and 0.1 to 1 part of an adjuvant.

In some embodiments of the present disclosure, the raw material components of the anti-corrosion coating comprise, based on parts by weight, 40 to 44 parts of epoxy resin, 5 to 8 parts of the composite corrosion inhibitor, 8 to 10 parts of the curing agent, 23 to 26 parts of the filler, and 0.5 to 0.8 parts of the adjuvant.

In some embodiments of the present disclosure, the curing agent is selected from at least one of imidazole, phenylenediamine, diaminodiphenylmethane, aromatic amine E, m-phenylenediamine, or polyamide.

In some embodiments of the present disclosure, the filler is selected from at least one of talc powder, carbon black, silica, titanium dioxide, mica powder, wollastonite powder, ceramic powder, or glass flakes.

In some embodiments of the present disclosure, the adjuvant is selected from at least one of a defoamer, a leveling agent, a thixotropic agent, a coupling agent, an anti-settling agent, or a dispersant.

In some embodiments of the present disclosure, the raw material components of the anti-corrosion coating comprise, based on parts by weight, 30 to 44 parts of epoxy resin and 1 to 10 parts of a composite corrosion inhibitor. The composite corrosion inhibitor comprises a Zn-metal-organic framework material, a thiourea compound, and an inorganic corrosion inhibitor.

In some embodiments of the present disclosure, the raw material components of the anti-corrosion coating comprise, based on parts by weight, 30 to 44 parts of epoxy resin, 1 to 4 parts of the Zn-metal-organic framework material, 0.4 to 2 parts of the thiourea compound, 1 to 4 parts of the inorganic corrosion inhibitor, 1 to 12 parts of a curing agent, 1 to 28 parts of a filler, and 0.1 to 1 part of an adjuvant.

In a seventh aspect, the present disclosure provides a method for preparing the anti-corrosion coating as described above. The method comprises the following steps.

In S100, a Zn-metal-organic framework material is synthesized using a hydrothermal process.

In S200, the Zn-metal-organic framework material, the epoxy resin, the thiourea compound and/or the inorganic corrosion inhibitor are uniformly mixed, and melt-extrusion and sieving are performed on the mixture, to obtain the anti-corrosion coating.

In some embodiments of the present disclosure, parts by weight of the epoxy resin, the curing agent, the filler, and the adjuvant are respectively as follows: 30 to 44 parts of the epoxy resin, 1 to 12 parts of the curing agent, 1 to 28 parts of the filler, and 0.1 to 1 part of the adjuvant.

In some embodiments of the present disclosure, a molar ratio of the Zn-metal-organic framework material to the thiourea compound ranges from (1: 1) to (6: 1).

In some embodiments of the present disclosure, a molar ratio of the metal-organic framework material to the inorganic corrosion inhibitor ranges from (1: 1) to (1: 5).

In some embodiments of the present disclosure, based on parts by weight, the Zn-metal-organic framework material ranges from 1 to 4 parts.

In some embodiments of the present disclosure, based on parts by weight, the thiourea compound ranges from 0.4 to 2 parts.

In some embodiments of the present disclosure, based on parts by weight, the inorganic corrosion inhibitor ranges from 1 to 4 parts.

In some embodiments of the present disclosure, parts by weight of the components are respectively as follows: 30 to 44 parts of epoxy resin, 1 to 4 parts of the Zn-metal-organic framework material, 0.4 to 2 parts of the thiourea compound, 1 to 4 parts of the inorganic corrosion inhibitor, 1 to 12 parts of the curing agent, 1 to 28 parts of the filler, and 0.1 to 1 part of the adjuvant.

In some embodiments of the present disclosure, the hydrothermal synthesis process comprises: dissolving zinc nitrate and 2-thiophenecarboxylic acid in a mixed solution of water and methanol; adding sodium hydroxide, followed by 4,4'-bipyridine, into the mixed solution, uniformly mixing, and placing the mixture in a hydrothermal reactor for a reaction at 100°C to 150°C for 8 hours to 16 hours; and washing and drying, subsequent to the complete reaction, the obtained solid to obtain the Zn-metal-organic framework material.

In an eighth aspect, the present disclosure provides use of the anti-corrosion coating as described above or the anti-corrosion coating prepared by the method as described above in anti-corrosion of a metallic substrate.

In some embodiments of the present disclosure, the metallic substrate comprises an elemental metal or a metallic alloy.

In a ninth aspect, the present disclosure provides an anti-corrosion coating layer. The anti-corrosion coating layer is obtained by uniformly coating, by means of electrostatic spraying, and curing the anti-corrosion coating as described above or the anti-corrosion coating prepared by the method as described above on a surface of a metallic substrate.

In some embodiments of the present disclosure, the metallic substrate comprises an elemental metal or a metallic alloy.

In a tenth aspect, the present disclosure provides a coated product. The coated product comprises a metallic substrate and the anti-corrosion coating as described above or the anti-corrosion coating prepared by the method as described above, coated on the metallic substrate.

In some embodiments of the present disclosure, the metallic substrate comprises an elemental metal or a metallic alloy.

Other features and advantages of the present disclosure will be set forth in the following description, and in part will become apparent from the description, or may be understood by practicing the present disclosure. The objects and other advantages of the present disclosure can be realized and attained through the structures particularly pointed out in the specification, claims, and drawings.

### DETAILED DESCRIPTION

Concept and resulting technical effects of the present disclosure will be clearly and completely described below with reference to embodiments, to fully understand purposes, features, and effects of the present disclosure. The embodiments described herein are only part of the embodiments of the present disclosure and are not all embodiments of the present disclosure. Based on the embodiments of the present disclosure, other embodiments obtained by those skilled in the art without creative efforts shall fall within the scope of protection of the present disclosure.

In the specification, descriptions with reference to the terms "an embodiment", "some embodiments", "an exemplary embodiment", "an example", "a specific example", or "some examples" etc., mean that specific features, structure, materials or characteristics described in conjunction with the embodiment or example are comprised in at least one embodiment or example of the present disclosure. In the specification, the schematic representations of the above terms do not necessarily refer to the same embodiment or example. Moreover, the described specific features, structures, materials or characteristics may be combined in any one or more embodiments or examples in a suitable manner.

In the present disclosure, unless stated otherwise, the numerical range "a to b" denotes an abbreviated representation of any combination of real numbers between a and b, where both a and b are real numbers. Unless stated otherwise, individual reactions or process steps may or may not be performed sequentially. Preferably, the reaction method in the present disclosure is carried out sequentially.

In the following examples, techniques or conditions that are not specified shall be based on the techniques or conditions described in literature in the related art or according to the product introduction. The used reagents or instruments without indicating the manufacturers are all conventional and commercially available products.

Some embodiments of the present disclosure provide an anti-corrosion coating. Raw material components of the anti-corrosion coating comprise, based on parts by weight, 30 to 44 parts of epoxy resin and 1 to 10 parts of an azole-functionalized metal-organic framework material.

The anti-corrosion coating according to the present disclosure refer to that the epoxy resin is used as the main material and the azole-functionalized metal-organic framework functional filler is introduced to significantly improve the corrosion resistance of the coating, thereby realizing long-term corrosion protection. On the one hand, in the present disclosure, a surface of a metal-organic framework (MOF) material is modified with azole molecules, which can serve as connection sites. MOF can be chelated with the metal surface through the azole molecules, thereby facilitating the formation of a dense physical barrier layer by MOF on a metal surface. As a result, permeation of ions and water molecules is reduced, thereby slowing down a corrosion rate of metals. At the same time, by utilizing a large specific surface area and good chemical stability of the MOF material, the azole molecules can be loaded inside and on a surface of an MOF nanoframe material. Under stimuli of external temperature and pH environment, responsive release of the azole molecules inside and outside the framework material is triggered, forming an organic molecular protective film on the metal surface. The anti-corrosion coating of the present disclosure, by means of the synergistic resistance of the physical barrier layer and the azole molecular protective film, can exert excellent active and passive protection functions to significantly improve the anti-corrosion performance of the coating layer, thereby meeting long-term requirement on anti-corrosion of the metals in hot and humid environment for long term .

In some embodiments of the present disclosure, the raw material components of the anti-corrosion coating further comprise, based on parts by weight, 1 to 12 parts of a curing agent, 1 to 28 parts of a filler, and 0.1 to 1 part of an adjuvant.

In some embodiments of the present disclosure, the raw material components of the anti-corrosion coating comprise, based on parts by weight, 40 to 44 parts of epoxy resin, 5 to 8 parts of the azole-functionalized metal-organic framework material, 8 to 10 parts of the curing agent, 23 to 26 parts of the filler, and 0.5 to 0.8 parts of the adjuvant.

In some embodiments of the present disclosure, the epoxy resin is selected from at least one of bisphenol A epoxy resin, phenolic epoxy resin, bisphenol F epoxy resin, or bisphenol S epoxy resin.

Preferably, the epoxy resin is selected from bisphenol A epoxy resin. The bisphenol A epoxy resin may be selected from common types known in the related art, such as type E42.

For the anti-corrosion coating according to this embodiment, MOF nanoparticles loaded with the azole molecules are added into the epoxy resin, which can effectively realize the responsive release of the azole molecules under the external temperature and pH environment, further forming the protective film on the metal surface. Through the combined effects of the physical barrier and the chemical reaction, the epoxy resin-based coating is improved in terms of high-temperature resistance.

In some embodiments of the present disclosure, the azole-functionalized metal-organic framework material is selected from at least one of benzotriazole-metal-organic framework material (BTA-MOF),methylbenzotriazole-metal-organic framework material (TTA-MOF), benzothiazole-metal-organic framework material (Benzothiazole-MOF), or 2-mercaptobenzothiazole-metal-organic framework material (MBT-MOF).

For the anti-corrosion coating according to this embodiment, the MOF is functionalized, and the azole ligand is added. During an anti-corrosion process, the responsive release of the azole molecules can be effectively achieved under the stimuli of the external temperature and pH environment, and the corrosion inhibition components of the azole molecules released by the responsive release can form a protective film on a metallic substrate, exerting a good protective effect and improving the corrosion resistance of the coating layer. Based on the synergistic effect of the physical barrier and the stimuli-responsive active corrosion protection, the corrosion resistance of the coating layer is significantly improved.

Preferably, the azole-functionalized metal-organic framework material is a benzotriazole-metal-organic framework material (BTA-MOF). In the present disclosure, the epoxy resin coating layer is improved in terms of corrosion resistance by introducing a sustained-release agent/a metal-organic framework functional filler. Benzotriazole (BTA) can form a protective film on the metal surface, reducing the corrosion rate of the metal. At the same time, BTA can be loaded on the MOF nanoparticles by means of the large specific surface area and good chemical stability of the MOF material, thereby effectively facilitating the responsive release of the corrosion inhibitor. Based on the physical barrier of the coating layer and the responsive release of the corrosion inhibitor in the MOF, the coating layer can exert active and passive protection functions, significantly improving anti-corrosion performance of the coating layer.

In some embodiments of the present disclosure, the curing agent is selected from at least one of imidazole, phenylenediamine, diaminodiphenylmethane, aromatic amine E, m-phenylenediamine, or polyamide.

In some embodiments of the present disclosure, the filler is selected from at least one of talc powder, carbon black, silica, titanium dioxide, mica powder, wollastonite powder, ceramic powder, or glass flakes.

In some embodiments of the present disclosure, the adjuvant is selected from at least one of a defoamer, a coupling agent, or a dispersant.

In some embodiments of the present disclosure, the defoamer is selected from at least one of benzoin (2-hydroxy-1,2-diphenylethanone), polyoxypropylene oxyethylene glycol ether, polydimethylsiloxane, higher aliphatic alcohol, or tributyl phosphate.

In some embodiments of the present disclosure, the coupling agent is selected from at least one of organosilane coupling agents, such as KH-560, KH602, and methyltriethoxysilane.

In the present disclosure, the above-mentioned curing agent, filler, adjuvant, etc., are merely illustrative rather than exhaustive, and are merely for illustration rather than any limitation. Those skilled in the art will appreciate that the curing agent, filler, adjuvant, of any known type in the art can be reasonably used according to actual conditions.

Some other embodiments of the present disclosure provide a method for preparing the anti-corrosion coating as described above. The method comprises the following steps.

In S100, a Zn-metal-organic framework material is synthesized using a hydrothermal process.

In S200, an azole ligand is added to the Zn-metal-organic framework material for a reaction to synthesize the azole-functionalized metal-organic framework material.

In S300, the azole-functionalized metal-organic framework material is uniformly mixed with the epoxy resin, and melt-extrusion and sieving are performed on the mixture, to obtain the anti-corrosion coating.

In the method for preparing the anti-corrosion coating according to the present disclosure, the epoxy resin as the main material is introduced with the sustained-release agent/the metal-organic framework functional filler to significantly improve the corrosion resistance of the prepared coating. The excellent active and passive protection functions can be achieved through the synergistic resistance of the physical barrier layer and the azole molecular protective film, significantly improving the anti-corrosion performance of the coating to meet the long-term anti-corrosion needs of the metal in the long-term hot and humid environment. Moreover, the method according to the present disclosure features simple process, mild reaction conditions, ease of operation, high production efficiency, and suitability for large-scale production applications.

In some embodiments of the present disclosure, the azole-functionalized metal-organic framework material, the epoxy resin, the curing agent, the filler, and the adjuvant are uniformly mixed, and melt-extrusion and sieving are performed on the mixture, to obtain the anti-corrosion coating.

In some embodiments of the present disclosure, parts by weight of the azole-functionalized metal-organic framework material, the epoxy resin, the curing agent, the filler, and the adjuvant are as follows: 30 to 44 parts of the epoxy resin, 1 to 10 parts of the azole-functionalized metal-organic framework material, 1 to 12 parts of the curing agent, 1 to 28 parts of the filler, and 0.1 to 1 part of the adjuvant.

In some preferred embodiments of the present disclosure, parts by weight of the azole-functionalized metal-organic framework material, the epoxy resin, the curing agent, the filler, and the adjuvant are as follows: 40 to 44 parts of the epoxy resin, 5 to 8 parts of the azole-functionalized metal-organic framework material, 8 to 10 parts of the curing agent, 23 to 26 parts of the filler, and 0.5 to 0.8 parts of the adjuvant.

In some embodiments of the present disclosure, in step S100, said synthesizing the Zn-metal-organic framework material (Zn-MOF) using the hydrothermal process comprises the following steps.

In S101, zinc nitrate and 2-thiophenecarboxylic acid are dissolved in a mixed solution of water and methanol.

In S102, sodium hydroxide and then 4,4'-bipyridine are added into the mixed solution, uniformly mixed, and the mixture is placed in a hydrothermal reactor for a reaction at 100°C to 150°C for 8 hours to 16 hours.

In S103, the obtained solid is washed and dried subsequent to the complete reaction, to obtain the Zn-metal-organic framework material.

In some embodiments of the present disclosure, a molar ratio of zinc nitrate Zn(NO₃)₂ to 2-thiophenecarboxylic acid is 1: (2 to 3), and preferably, 1: 2.

In some embodiments of the present disclosure, a molar ratio of zinc nitrate Zn(NO₃) to 4,4'-bipyridine is 1: (2 to 3), and preferably, 1: 2.

In some embodiments of the present disclosure, a molar ratio of zinc nitrate Zn(NO₃)₂ to sodium hydroxide is 1: (2 to 3), and preferably, 1: 2.

In some embodiments of the present disclosure, in the mixed solution of water and methanol, a ratio of water to methanol is 1: 1.

In some embodiments of the present disclosure, in step S102, preferably, the reaction is carried out in the hydrothermal reactor at 130°C for 12 hours.

In some embodiments of the present disclosure, in step S200, said synthesizing the azole-functionalized metal-organic framework material comprises the following steps.

In S201, the Zn-metal-organic framework material (Zn-MOF) is dispersed in methanol, and the azole ligand is added for a reaction at 40°C to 70°C for 8 hours to 13 hours.

In S202, the obtained solid is washed and dried subsequent to the complete reaction, to obtain the azole-functionalized metal-organic framework material.

In some embodiments of the present disclosure, a mass ratio of the Zn-MOF to the azole ligand is 1: (4 to 5), and preferably, 1: 4.

In some embodiments of the present disclosure, the azole ligand comprises at least one of benzotriazole ligand, methylbenzotriazole ligand, 2-mercaptobenzothiazole ligand, benzimidazole ligand, or benzothiazole ligand.

Preferably, the azole ligand is a benzotriazole (BTA) ligand. A mass ratio of the Zn-MOF to BTA is 1: (4 to 5), and preferably, 1: 4.

In some embodiments of the present disclosure, the azole-functionalized metal-organic framework material is selected from at least one of benzotriazole-metal-organic framework material (BTA-MOF), methylbenzotriazole-metal-organic framework material (TTA-MOF), benzothiazole-metal-organic framework material (Benzothiazole-MOF), or 2-mercaptobenzothiazole-metal-organic framework material (MBT-MOF).

Preferably, the azole ligand is a benzotriazole (BTA) ligand, and the prepared azole-functionalized metal-organic framework material is a benzotriazole-metal-organic framework material (BTA-MOF). In the present disclosure, the epoxy resin coating layer is introduced with the sustained-release agent/the metal-organic framework functional filler to significantly improve the corrosion resistance of the coating layer. Benzotriazole (BTA) can form the protective film on the metal surface, reducing the corrosion rate of the metal. At the same time, BTA can be loaded on the MOF nanoparticles by using the large specific surface area and the good chemical stability of the MOF material, which can effectively achieve the responsive release of the corrosion inhibitor. Based on the physical barrier of the coating layer and the responsive release of the corrosion inhibitor in the MOF, the coating layer can exert the active and passive protection functions, significantly improving the anti-corrosion performance of the coating layer.

In some embodiments of the present disclosure, in step S201, preferably, the reaction is carried out at 50° C for 10 hours.

In a specific embodiment of the present disclosure, the method for preparing the anti-corrosion coating are as follows.

(1) Hydrothermal synthesis of Zn-MOF material: 1 mol of Zn(NO₃)₂ and 2 mol of 2-thiophenecarboxylic acid were fully dissolved in a mixed solution of water and methanol at a ratio of 1: 1, 2 mol of sodium hydroxide was added, and 2 mol of 4,4'-bipyridine was finally added. The mixture reacted at 130°C in a hydrothermal reactor for 12 hours, and the Zn-MOF powder material was finally obtained by washing and drying.

(2) Preparation of benzotriazole-metal-organic framework material (BTA-MOF): 1 g of Zn-MOF was dispersed in methanol, followed by 4 g of BTA. The mixture reacted at 50°C for 10 hours, and an BTA-MOF powder material was finally obtained by washing and drying.

(3) Preparation of high-temperature-resistant anti-corrosion coating: 1 to 10 parts by weight of an BTA-MOF material, 30 to 44 parts by weight of epoxy resin, 1 to 12 parts by weight of a curing agent, 1 to 28 parts by weight of filler, and 0.1 to 1 part by weight of an adjuvant are uniformly mixed, and then melt-extrusion and sieving were performed on the mixture, to obtain the anti-corrosion coating.

Some other embodiments of the present disclosure provide use of the anti-corrosion coating as described above or the anti-corrosion coating prepared by the method as described above in anti-corrosion of a metallic substrate.

The anti-corrosion coating obtained in the present disclosure is applied to the anti-corrosion of the metallic substrate. The formed anti-corrosion coating layer, based on the synergistic resistance of the physical barrier layer and the azole molecular protective film, can exert excellent active and passive protection functions, significantly improving the corrosion resistance of the coating layer. In this way, the coating layer can be used in the hot and humid environment for a long period of time, while exhibiting good corrosion resistance and excellent anti-corrosion effect.

In some embodiments of the present disclosure, the metallic substrate comprises an elemental metal or a metallic alloy.

Some other embodiments of the present disclosure provide an anti-corrosion coating layer. The anti-corrosion coating layer is obtained by uniformly coating by means of electrostatic spraying and curing anti-corrosion coating as described above or the anti-corrosion coating prepared by the method as described above on a surface of a metallic substrate.

The anti-corrosion coating layer according to the present disclosure is obtained by coating the aforementioned anti-corrosion coating, and therefore also has the technical effects of the anti-corrosion coating described above. The anti-corrosion coating layer, based on the synergistic resistance of the physical barrier layer and the azole molecular protective film, can exert the excellent active and passive protection functions, significantly improving the corrosion resistance of the coating layer. In this way, the coating layer can be used in the hot and humid environment for a long period of time, while exhibiting the good corrosion resistance and the excellent anti-corrosion effect.

In some embodiments of the present disclosure, the anti-corrosion coating layer can also be obtained by preparing the above-mentioned anti-corrosion coating into a slurry, uniformly coating by means of blade coating, spin coating, or spray coating, and curing on the surface of the metallic substrate, and its effects are consistent with the above-mentioned electrostatic spraying effects.

In some embodiments of the present disclosure, the metallic substrate comprises an elemental metal or a metallic alloy.

In some embodiments of the present disclosure, the anti-corrosion coating layer has a thickness ranging from 80 µm to 180 µm.

In some embodiments of the present disclosure, the curing process may specifically involve drying at room temperature for 2 hours, followed by curing in an oven at 200°C for 1 hour, or other commonly used curing processes.

Some other embodiments of the present disclosure provide a coated product. The coated product comprises a metallic substrate and the anti-corrosion coating as described above or the anti-corrosion coating prepared by the method as described above, coated on the metallic substrate.

The coated product according to the present disclosure is obtained by coating the aforementioned anti-corrosion coating, and therefore also has the technical effects of the anti-corrosion coating described above. Such a coated product can exert active and passive anti-corrosion functions, significantly improving anti-corrosion performance of the metallic substrate. In this way, the coated product can be used in harsh environment such as high temperature, high humidity, and hot water for a long period of time, while exhibiting good corrosion resistance and excellent anti-corrosion effect.

In some embodiments of the present disclosure, the metallic substrate comprises an elemental metal or a metallic alloy.

Some other embodiments of the present disclosure provide use of the above-mentioned coated product in the field of household appliances.

In some embodiments of the present disclosure, the above-mentioned coated product can be applied to the field of household appliances. The household appliances comprise refrigeration appliances (e.g., household refrigerators, beverage coolers), air conditioners (e.g., room air conditioners, electric fans, ventilation fans, air cooling and heating machines, air dehumidifiers, cooling fans, humidifiers), cleaning appliances (e.g., washing machines, dryers, electric irons, vacuum cleaners, floor waxers, robot vacuum cleaners), kitchen appliances (e.g., electric stoves, microwave ovens, induction cookers, electric ovens, rice cookers, dishwashers, food processors), electric heating appliances (e.g., space heaters), audio and video appliances (e.g., miniature projectors, televisions, radios, tape recorders, video recorders, cameras, combination audio equipment).

Other features and advantages of the present disclosure will be set forth in the following description, and in part will become apparent from the description, or may be understood by practicing the present disclosure. The objects and other advantages of the present disclosure can be realized and attained through the structures particularly pointed out in the specification, claims, and drawings.

### Example 1

(1) Hydrothermal synthesis of Zn-MOF material: 1 mol of Zn(NO₃)₂ and 2 mol 2-thiophenecarboxylic acid were dissolved in a mixed solution of water and methanol at a ratio of 1: 1; 2 mol of sodium hydroxide was added, and 2 mol of 4,4'-bipyridine was finally added; the mixture reacted in a hydrothermal reactor at 130°C for 12 hours, followed by washing and drying to obtain Zn-MOF powder material.
(2) Preparation of benzotriazole-metal-organic framework material (BTA-MOF): 1 g of Zn-MOF was dispersed in methanol, and 4 g of BTA was added; the mixture reacted at 50°C for 10 hours, followed by washing and drying to obtain BTA-MOF powder material.
(3) Preparation of anti-corrosion composite coating: based on parts by weight, 42 parts of bisphenol A epoxy resin, 8 parts of BTA-MOF powder, 10 parts of imidazole, 26 parts of talc and 0.6 parts of benzoin were fully mixed, and then melt-extrusion and sieving were performed on the mixture, to obtain composite coating powder.
(4) The obtained coating powder was electrostatically sprayed onto a surface of alloy steel Q420, and then cured, to obtain an anticorrosive composite coating.

The coating layer had a thickness of 156 µm.

### Example 2

Example 2 differed from Example 1 in the formulation of the coating. In this example, based on parts by weight, 44 parts of bisphenol A epoxy resin, 5 parts of BTA-MOF powder, 8 parts of imidazole, 24 parts of talc powder, and 0.8 parts of benzoin were mixed, and the others were the same as those in Example 1.

### Example 3

Example 3 differed from Example 1 in the formulation of the coating. In this example, based on parts by weight, 35 parts of bisphenol A epoxy resin, 2 parts of BTA-MOF powder, 10 parts of imidazole, 26 parts of talc powder, and 0.6 parts of benzoin were mixed, and the others were the same as those in Example 1.

### Example 4

Example 4 differed from Example 1 in step (1), in which the amounts of Zn(NO₃)₂, 2-thiophenecarboxylic acid, and 4,4'-bipyridine were 1 mol, 3 mol, and 3 mol, respectively. The others were the same as those in Example 1.

### Example 5

Example 5 differed from Example 1 in step (1), in which the reaction was carried out in the hydrothermal reactor at 150°C for 10 hours. The others were the same as those in Example 1.

### Example 6

Example 6 differed from Example 1 in step (2), in which the amounts of Zn-MOF and BTA were 1 g and 5 g, respectively. The others were the same as those in Example 1.

### Example 7

Example 7 differed from Example 1 in step (2), in which the reaction was carried out at 60°C for 8 hours. The others were the same as those in Example 1.

### Comparative Example 1

(1) Hydrothermal synthesis of Zn-MOF material: 1 mol of Zn(NO₃)₂ and 2 mol of 2-thiophenecarboxylic acid were fully dissolved in a mixed solution of water and methanol at a ratio of 1: 1; 2 mol of sodium hydroxide was added, and 2 mol of 4,4'-bipyridine was finally added; the mixture reacted in a hydrothermal reactor at 130°C for 12 hours, followed by washing and drying to obtain Zn-MOF powder material.
(2) Preparation of epoxy resin composite coating layer: based on parts by weight, 42 parts of bisphenol A epoxy resin, 8 parts of Zn-MOF powder, 10 parts of imidazole, 26 parts of talc powder, and 0.6 parts of benzoin were fully mixed, and then melt-extrusion and sieving were performed on the mixture, to obtain composite coating powder.
(3) The obtained coating powder was electrostatically sprayed onto a surface of alloy steel Q420, and then cured, to obtain the epoxy resin composite coating layer.

The coating layer had a thickness of 156 µm.

### Comparative Example 2

(1) Based on parts by weight, 42 parts of bisphenol A epoxy resin, 10 parts of imidazole, 26 parts of talc powder, and 0.6 parts of benzoin were fully mixed, and then melt-extrusion and sieving were performed on the mixture, to obtain coating powder.
(2) The obtained coating powder was electrostatically sprayed onto a surface of alloy steel Q420, and then cured, to obtain an epoxy resin coating layer.

The coating had a thickness of 156 µm.

### Test Examples

Corrosion resistance of the coating layers in Examples 1 to 7 and Comparative Examples 1 and 2 was evaluated using a cross-scratching test with the method as described below. The prepared coating layer samples were separately taken and subjected to scratching a cross with the consistent dimension on their surfaces. The coating layer samples were placed in a salt spray chamber. After 7 days of the salt spray test, the surfaces of the samples were tested according to the standard of GB/T 10125-2021. The results are shown in Table 1.

**[Table 1]**

| | 7-day salt spray test after scratching a cross on the coating layer |
|---|---|
| Example 1 | No peeling off of the coating layer; very slight corrosion products |
| Example 2 | No peeling off of the coating layer; very slight corrosion products |
| Example 3 | Peeling off of a small part of the coating layer; a few corrosion products |
| Example 4 | No peeling off of the coating layer; slight corrosion products |
| Example 5 | No peeling off of the coating layer; very slight corrosion products |
| Example 6 | No peeling off of the coating layer; slight corrosion products |
| Example 7 | No peeling off of the coating layer; very slight corrosion products |
| Comparative Example 1 | Obvious peeling off of the coating layer; a large amount of corrosion products |
| Comparative Example 2 | Significant peeling off of the coating layer; heavy corrosion products |

The corrosion resistance of the anti-corrosion coating layers was evaluated using the cross-scratching test. For the pure epoxy resin coating layer, obvious peeling off thereof and a large quantity of corrosion products on the substrate were observed. For the composite coating layer added with the Zn-MOF material, obvious substrate corrosion products at the cross-scratching part and merely slight peeling off of the coating layer were observed. For the composite coating layer added with the BTA-MOF material, the degree of corrosion was minimal, and merely slight corrosion products appeared at the position where the cross was scratched, which can be attributed to a protective film formed on the metallic by BTA corrosion inhibition components released by the responsive release. The protective film can exert excellent protective effects and improve the corrosion resistance of the coating layers.

High-temperature resistance and long-term corrosion resistance in Examples 1 to 7 and Comparative Examples 1 and 2 were tested with the method as described below. The coating layer samples were separately taken and immersed in hot water at 95°C for 7 days. Thereafter, the surfaces of the samples (in accordance with GB/T 1733-1993) were observed and electrochemical impedance thereof (in accordance with GB/T 39482-2020) was tested. The results are shown in Table 2.

**[Table 2]**

| | Surface observation | Electrochemical impedance after 7-day immersion in hot water at 95°C |
|---|---|---|
| Example 1 | No bubbling on the surface | 10 Ω to 11 Ω |
| Example 2 | No bubbling on the surface | 10 Ω to 11 Ω |
| Example 3 | Slight bubbling on the surface with a relatively small number of bubbles | 10 Ω to 8 Ω |
| Example 4 | Slight bubbling on the surface with a very small number of bubbles | 10 Ω to 9 Ω |
| Example 5 | No bubbling on the surface | 10 Ω to 11 Ω |
| Example 6 | Slight bubbling on the surface with a very small number of bubbles | 10 Ω to 9 Ω |
| Example 7 | No bubbling on the surface | 10 Ω to 11 Ω |
| Comparative Example 1 | Severe bubbling on the surface with a very large number of bubbles | 10 Ω to 7 Ω |
| Comparative Example 2 | Severe bubbling on the surface with a very large number of bubbles | 10 Ω to 7 Ω |

For the coating layers prepared in Examples and Comparative Examples, an initial electrochemical impedance ranged from 10 Ω to 12 Ω. After the 7-day immersion in the hot water at 95°C, for the composite coating layer added with the BTA-MOF material, its corrosion resistance was significantly superior than that of the pure epoxy resin coating layer and the Zn-MOF material coating due to the synergistic resistance of the physical barrier layer and the azole molecular protective film.

Some other embodiments of the present disclosure also provide an anti-corrosion coating. Raw material components of the anti-corrosion coating comprise, based on parts by weight, 30 to 44 parts of epoxy resin and 1 to 10 parts of a composite corrosion inhibitor. The composite corrosion inhibitor comprises a Zn-metal-organic framework material. The composite corrosion inhibitor further comprises at least one of a thiourea compound and an inorganic corrosion inhibitor.

For the anti-corrosion coating according to the present disclosure, the epoxy resin as the main material is introduced with the multi-component composite anti-corrosion inhibitor to significantly improve the corrosion resistance of the coating. On the one hand, since the composite corrosion inhibitor comprises the Zn-metal-organic framework material (Zn-MOF), thiourea or inorganic corrosion inhibitor molecules can be loaded inside and on the surfaces of the MOF nanoframe materials and released in response to the external environmental stimuli, due to the large specific surface area and the good chemical stability of the MOF materials. On the other hand, the thiourea compound molecules can be adsorbed on the surface of the metallic substrate based on coordination effect of S atoms with metal cations (e.g., Fe³⁺) of the metallic substrate, thereby forming a hydrophobic protective film. In this way, the corrosion of the metallic substrate can be effectively inhibited. The inorganic corrosion inhibitor can be evenly deposited on the metal surface, and covalent bonds in the molecules can complex with the metal surface, further covering active sites of the metal corrosion reaction and forming a denser protective layer. Therefore, in the present disclosure, the anti-corrosion requirement of the metals in the hot and humid environment for long term can be met based on the sustained release of MOF and the coordination effect of the thiourea compound molecules and/or the complexation effect of the inorganic corrosion inhibitors, in combination with the cross-linking of the epoxy resin and the barrier property of MOF fillers.

In some embodiments of the present disclosure, a molar ratio of the Zn-metal-organic framework material (Zn-MOF) to the thiourea compound ranges from (1: 1) to (6: 1), and preferably, 1: 1.

A molar ratio of the Zn-metal-organic framework material (Zn-MOF) to the inorganic corrosion inhibitor ranges from (1: 1) to (1: 5), and preferably, 1: 3.

In some embodiments of the present disclosure, based on parts by weight, the Zn-metal-organic framework material ranges from 1 to 4 parts.

In some embodiments of the present disclosure, based on parts by weight, the thiourea compound ranges from 0.4 to 2 parts.

In some embodiments of the present disclosure, based on parts by weight, the inorganic corrosion inhibitor ranges from 1 to 4 parts.

In some embodiments of the present disclosure, the thiourea compound is selected from at least one of thiourea, acylthiourea, thiosemicarbazide, or thiosemicarbazone, and preferably, the thiourea compound is thiourea.

In some embodiments of the present disclosure, the inorganic corrosion inhibitor is selected from at least one of silicate, molybdate, or tungstate, and preferably, silicate.

In some embodiments of the present disclosure, the corrosion inhibitor is selected from at least one of sodium silicate, sodium molybdate, or sodium tungstate, and preferably, sodium silicate.

In some preferred embodiments of the present disclosure, the raw material components of the anti-corrosion coating comprise, based on parts by weight, 30 to 44 parts of epoxy resin and 1 to 10 parts of a composite corrosion inhibitor. The composite corrosion inhibitor comprises 1 to 4 parts of a Zn-metal-organic framework material, 0.4 to 2 parts of a thiourea compound, and 1 to 4 parts of an inorganic corrosion inhibitor.

In some more preferred embodiments of the present disclosure, the raw material components of the anti-corrosion coating comprise, based on parts by weight, 30 to 44 parts of epoxy resin and 1 to 10 parts of a composite corrosion inhibitor. The composite corrosion inhibitor comprises 1 to 4 parts of a Zn-metal-organic framework material, 0.4 to 2 parts of thiourea, and 1 to 4 parts of sodium silicate.

For the anti-corrosion coating according to the present disclosure, the epoxy resin as the main material is introduced with the multi-component composite anti-corrosion inhibitor to significantly improve the corrosion resistance of the coating. The composite corrosion inhibitor comprises the Zn-metal-organic framework material (Zn-MOF), thiourea or inorganic corrosion inhibitor molecules can be loaded inside and on the surfaces of the MOF nanoframe materials and released in response to the external environmental stimuli by utilizing the large specific surface area and the good chemical stability of the MOF materials. Since the composite corrosion inhibitor further comprises thiourea, the thiourea compound molecules can be adsorbed on the surface of the metallic substrate based on coordination effect of S atoms with metal cations (e.g., Fe³⁺) of the metallic substrate, thereby forming a hydrophobic protective film. In this way, the corrosion of the metallic substrate can be effectively inhibited. On the other hand, since the composite corrosion inhibitor further comprises sodium silicate, silicon-oxygen bonds in the sodium silicate molecules can complex with the metal surface, further covering the active sites of the metal corrosion reaction, and can be evenly deposited on the metal surface to form a denser protective layer. Therefore, the composite corrosion inhibitor of the present disclosure can effectively and synergistically improve the corrosion resistance of the coating layer of the metal surface through the dual organic-inorganic protective layer formed by the coordination and complexation effects. Finally, in the present disclosure, the anti-corrosion requirement of the metals in the hot and humid environment for long term can be met by means of the sustained release of MOF and the dual organic-inorganic protective layer formed by the coordination and complexation effects, and in combination with the cross-linking of the epoxy resin and the barrier property of the MOF fillers.

In some embodiments of the present disclosure, the epoxy resin is selected from at least one of bisphenol A epoxy resin, phenolic epoxy resin, bisphenol F epoxy resin, or bisphenol S epoxy resin.

Preferably, the epoxy resin is selected from bisphenol A epoxy resin. The bisphenol A epoxy resin may be selected from common types in the art, such as type E42.

In some embodiments of the present disclosure, the raw material components of the anti-corrosion coating further comprise, based on parts by weight, 1 to 12 parts of a curing agent, 1 to 28 parts of a filler, and 0.1 to 1 part of an adjuvant.

In some preferred embodiments of the present disclosure, the raw material components of the anti-corrosion coating comprise, based on parts by weight, 30 to 44 parts of epoxy resin, 1 to 4 parts of a Zn-metal-organic framework material, 0.4 to 2 parts of a thiourea compound, 1 to 4 parts of an inorganic corrosion inhibitor, 1 to 12 parts of the curing agent, 1 to 28 parts of the filler, and 0.1 to 1 part of the adjuvant.

In some preferred embodiments of the present disclosure, the raw material components of the anti-corrosion coating comprise, based on parts by weight: 40 to 44 parts of the epoxy resin, 5 to 8 parts of a composite corrosion inhibitor, 8 to 10 parts of the curing agent, 23 to 26 parts of the filler, and 0.5 to 0.8 parts of the adjuvant.

In some embodiments of the present disclosure, the curing agent is selected from at least one of imidazole, phenylenediamine, diaminodiphenylmethane, aromatic amine E, m-phenylenediamine, or polyamide.

In some embodiments of the present disclosure, the filler is selected from at least one of talc powder, carbon black, silica, titanium dioxide, mica powder, wollastonite powder, ceramic powder, or glass flakes.

In some embodiments of the present disclosure, the adjuvant is selected from at least one of a defoamer, a leveling agent, a thixotropic agent, a coupling agent, an anti-settling agent, or a dispersant.

In some embodiments of the present disclosure, the defoamer is selected from at least one of benzoin (2-hydroxy-1,2-diphenylethanone), polyoxypropylene oxyethylene glycol ether, polydimethylsiloxane, higher aliphatic alcohol, or tributyl phosphate.

In some embodiments of the present disclosure, the leveling agent is selected from at least one of aqueous fluorosilicone leveling agents.

In some embodiments of the present disclosure, the thixotropic agent is selected from at least one of aqueous polyamide thixotropic agents.

In some embodiments of the present disclosure, the coupling agent is selected from at least one of organosilane coupling agents, for example, KH-560, KH602, and methyltriethoxysilane.

In some embodiments of the present disclosure, the anti-settling agent comprises, but not limited to, organobentonite.

In some embodiments of the present disclosure, the dispersant is selected from at least one of aqueous dispersants.

In the present disclosure, the above-mentioned curing agent, filler, adjuvant, etc., are examples rather than exhaustive, and are merely for illustration rather than any limitation. Those skilled in the art can understand that the curing agent, filler, adjuvant, etc., of any type commonly known in the art can be reasonably used according to actual conditions.

Some other embodiments of the present disclosure provide a method for preparing the anti-corrosion coating as described above. The method comprises the following steps.

In S100, a Zn-metal-organic framework material is synthesized using a hydrothermal process.

In S200, the Zn-metal-organic framework material, the epoxy resin, the thiourea compound and/or the inorganic corrosion inhibitor are uniformly mixed, and melt-extrusion and sieving are performed on the mixture, to obtain the anti-corrosion coating.

In the method for preparing the anti-corrosion coating according to the present disclosure, for the epoxy resin as the main material, the multi-component composite anti-corrosion inhibitor is introduced. The long-term anti-corrosion requirement of the metals in the hot and humid environment can be met using the sustained release of MOF in the composite corrosion inhibitor and the coordination effect of the thiourea compound molecules and/or the complexation effect of the inorganic corrosion inhibitor, in combination with the cross-linking of the epoxy resin and the barrier property of the MOF fillers. Moreover, the method according to the present disclosure features simple process, mild reaction conditions, easy operation, high production efficiency, and suitability for large-scale production applications.

In some embodiments of the present disclosure, parts by weight of the epoxy resin, the curing agent, the filler, and the adjuvant are respectively as follows: 30 to 44 parts of the epoxy resin, 1 to 12 parts of the curing agent, 1 to 28 parts of the filler, and 0.1 to 1 part of the adjuvant.

In some embodiments of the present disclosure, a molar ratio of the Zn-metal-organic framework (Zn-MOF) material to the thiourea compound ranges from (1: 1) to (6: 1), and preferably, 1: 1.

In some embodiments of the present disclosure, a molar ratio of the Zn-metal-organic framework material (Zn-MOF) to the inorganic corrosion inhibitor ranges from (1: 1) to (1: 5), and preferably, 1: 3.

In some embodiments of the present disclosure, based on parts by weight, the Zn-metal-organic framework material ranges from 1 to 4 parts.

In some embodiments of the present disclosure, based on parts by weight, the thiourea compound ranges from 0.4 to 2 parts.

In some embodiments of the present disclosure, based on parts by weight, the inorganic corrosion inhibitor ranges from 1 to 4 parts.

In some embodiments of the present disclosure, the thiourea compound is selected from at least one of thiourea, acylthiourea, thiosemicarbazide, or thiosemicarbazone, and preferably, the thiourea compound is thiourea.

In some embodiments of the present disclosure, the inorganic corrosion inhibitor is selected from at least one of silicate, molybdate, or tungstate, and preferably, the inorganic corrosion inhibitor is silicate.

In some embodiments of the present disclosure, the corrosion inhibitor is selected from at least one of sodium silicate, sodium molybdate, or sodium tungstate, and preferably, the corrosion inhibitor is sodium silicate.

In some embodiments of the present disclosure, the raw material components of the anti-corrosion coating further comprise, based on parts by weight, 1 to 12 parts of a curing agent, 1 to 28 parts of a filler, and 0.1 to 1 part of an adjuvant.

In some preferred embodiments of the present disclosure, the raw material components of the anti-corrosion coating comprise, based on parts by weight, 30 to 44 parts of epoxy resin and 1 to 10 parts of a composite corrosion inhibitor. The composite corrosion inhibitor comprises 1 to 4 parts of a Zn-metal-organic framework material, 0.4 to 2 parts of a thiourea compound, and 1 to 4 parts of an inorganic corrosion inhibitor.

In some more preferred embodiments of the present disclosure, the raw material components of the anti-corrosion coating comprise, based on parts by weight, 30 to 44 parts of epoxy resin and 1 to 10 parts of a composite corrosion inhibitor. The composite corrosion inhibitor comprises 1 to 4 parts of a Zn-metal-organic framework material, 0.4 to 2 parts of thiourea, and 1 to 4 parts of sodium silicate.

In some preferred embodiments of the present disclosure, the method for preparing the anti-corrosion coating comprises steps of: synthesizing a Zn-metal-organic framework material using a hydrothermal process; uniformly mixing the Zn-metal-organic framework material, the epoxy resin, the thiourea compound, the inorganic corrosion inhibitor, the curing agent, the filler, and the adjuvant; and performing melt-extrusion and sieving on the mixture, to obtain the anti-corrosion coating.

In some embodiments of the present disclosure, in step S100, said synthesizing the Zn-metal-organic framework material (Zn-MOF) using the hydrothermal process comprises the following steps.

In S101, zinc nitrate and 2-thiophenecarboxylic acid are dissolved in a mixed solution of water and methanol.

In S102, sodium hydroxide and then 4,4'-bipyridine are added into the mixed solution, uniformly mixed, and the mixture is placed in a hydrothermal reactor for a reaction at 100°C to 150°C for 8 hours to 16 hours.

In S103, the obtained solid is washed and dried subsequent to the complete reaction, to obtain the Zn-metal-organic framework material.

In some embodiments of the present disclosure, a molar ratio of the zinc nitrate Zn(NO₃)₂ to the 2-thiophenecarboxylic acid is 1: (2 to 3), and preferably, 1: 2.

In some embodiments of the present disclosure, a molar ratio of the zinc nitrate Zn(NO₃) to the 4,4'-bipyridine is 1: (2 to 3), and preferably, 1: 2.

In some embodiments of the present disclosure, a molar ratio of the zinc nitrate Zn(NO₃)₂ to the sodium hydroxide is 1: (2 to 3), and preferably, 1: 2.

In some embodiments of the present disclosure, in the mixed solution of the water and the methanol, a ratio of the water to the methanol is 1: 1.

In some embodiments of the present disclosure, in step S102, preferably, the reaction is carried out in the hydrothermal reactor at 130°C for 12 hours.

In a specific example of the present disclosure, the method for preparing the anti-corrosion coating was as follows.
(1) Hydrothermal synthesis of Zn-MOF material: 1 mol of Zn(NO₃)₂ and 2 mol of 2-thiophenecarboxylic acid were fully dissolved in a mixed solution of water and methanol at a ratio of 1: 1, 2 mol of sodium hydroxide was added, and 2 mol of 4,4'-bipyridine was finally added. The mixture reacted in a hydrothermal reactor at 130°C for 12 hours, and the Zn-MOF powder material was finally obtained by washing and drying.
(2) Preparation of high-temperature resistant anti-corrosion coating: 30 to 44 parts by weight of epoxy resin, 1 to 4 parts by weight of a Zn-MOF material, 0.4 to 2 parts by weight of thiourea, 1 to 4 parts of by weight sodium silicate, 1 to 12 parts by weight of a curing agent, 1 to 28 parts by weight of a filler, and 0.1 to 1 part by weight of an adjuvant are uniformly mixed, and melt-extrusion and sieving were performed on the mixture, to obtain the anti-corrosion coating.

Some other embodiments of the present disclosure provide use of the anti-corrosion coating as described above or the anti-corrosion coating prepared by the method as described above in anti-corrosion of a metallic substrate.

The anti-corrosion coating obtained in the present disclosure is applied to the anti-corrosion of the metallic substrate. The formed anti-corrosion coating layer can be significantly improved in terms of its anti-corrosion performance by utilizing the sustained release of MOF in the composite corrosion inhibitor and the coordination effect of the thiourea compound molecules and/or the complexation effect of the inorganic corrosion inhibitors. At the same time, in combination with the cross-linking of the epoxy resin and the barrier property of the MOF fillers, the coating layer can be used in the hot and humid environment for a long period of time, while exhibiting the good corrosion resistance and the excellent corrosion protection effect.

In some embodiments of the present disclosure, the metallic substrate comprises an elemental metal or a metallic alloy.

Some other embodiments of the present disclosure provide an anti-corrosion coating layer. The anti-corrosion coating layer is obtained by uniformly coating, by means of electrostatic spraying, and curing the anti-corrosion coating as described above or the anti-corrosion coating prepared by the method as described above on a surface of a metallic substrate.

The anti-corrosion coating layer according to the present disclosure is obtained by means of the electrostatic spraying of the aforementioned anti-corrosion coating, and therefore also has the technical effects of the anti-corrosion coating described above. The anti-corrosion coating layer can be significantly improved in terms of its anti-corrosion performance by utilizing the sustained release of MOF in the composite corrosion inhibitor and the coordination effect of the thiourea compound molecules and/or the complexation effect of the inorganic corrosion inhibitors. At the same time, in combination with the cross-linking of the epoxy resin and the barrier property of the MOF fillers, the coating layer can be used in the hot and humid environment for a long period of time, while exhibiting the good corrosion resistance and the excellent corrosion protection effect.

In some embodiments of the present disclosure, the above-mentioned anti-corrosion coating can be prepared into a slurry, which is uniformly coated by means of blade coating, spin coating or spray coating on the surface of the metallic substrate and then cured, to obtain the anti-corrosion coating layer. Such a process has effects consistent with those of the above-mentioned electrostatic spraying.

In some embodiments of the present disclosure, the metallic substrate comprises an elemental metal or a metallic alloy.

In some embodiments of the present disclosure, the anti-corrosion coating layer has a thickness ranging from 80 µm to 180 µm.

In some embodiments of the present disclosure, the curing process may specifically involve drying at room temperature for 2 hours, followed by curing in an oven at 200°C for 1 hour, or curing in other common manners.

Some other embodiments of the present disclosure provide a coated product. The coated product comprises a metallic substrate and the anti-corrosion coating as described above or the anti-corrosion coating prepared by the method as described above, coated on the metallic substrate.

The coated product according to the present disclosure is obtained by coating the aforementioned anti-corrosion coating, and therefore also has the technical effects of the anti-corrosion coating described above. The coated product can be significantly improved in terms of its anti-corrosion performance by utilizing the sustained release of MOF in the composite corrosion inhibitor and the coordination effect of the thiourea compound molecules and/or the complexation effect of the inorganic corrosion inhibitors. At the same time, in combination with the cross-linking of the epoxy resin and the barrier property of the MOF fillers, the coated product can be used in the hot and humid environment for a long period of time, while exhibiting the good corrosion resistance and the excellent corrosion protection effect.

In some embodiments of the present disclosure, the metallic substrate comprises an elemental metal or a metallic alloy.

Some other embodiments of the present disclosure provide use of the above-mentioned coated product in the field of household appliances.

In some embodiments of the present disclosure, the household appliances comprise refrigeration appliances (e.g., household refrigerators, beverage coolers), air conditioners (e.g., room air conditioners, electric fans, ventilation fans, air cooling and heating machines, air dehumidifiers, cooling fans, humidifiers), cleaning appliances (e.g., washing machines, dryers, electric irons, vacuum cleaners, floor waxers, robot vacuum cleaners), kitchen appliances (e.g., electric stoves, microwave ovens, induction cookers, electric ovens, rice cookers, dishwashers, food processors), electric heating appliances (e.g., space heaters), audio and video appliances (e.g., miniature projectors, televisions, radios, tape recorders, video recorders, cameras, combination audio equipment).

Other features and advantages of the present disclosure will be set forth in the following description, and in part will become apparent from the description, or may be understood by practicing the present disclosure. The objects and other advantages of the present disclosure can be realized and attained through the structures particularly pointed out in the specification, claims, and drawings.

### Example 8

(1) Hydrothermal synthesis of Zn-MOF material: 1 mol of Zn(NO₃)₂ and 2 mol 2-thiophenecarboxylic acid were dissolved in a mixed solution of water and methanol at a ratio of 1: 1; 2 mol of sodium hydroxide was added, and 2 mol of 4,4'-bipyridine was finally added; the mixture reacted in a hydrothermal reactor at 130°C for 12 hours, followed by washing and drying to obtain Zn-MOF powder material.
(2) Preparation of anti-corrosion composite coating: based on parts by weight, 42 parts of bisphenol A epoxy resin, 1 part of a Zn-MOF material, 1 part of thiourea, 3 parts of sodium silicate, 10 parts of imidazole, 26 parts of talc powder, and 0.6 parts of benzoin were fully mixed, and then melt-extrusion and sieving were performed on the mixture, to obtain composite coating powder.
(3) The obtained coating powder was electrostatically sprayed onto a surface of alloy steel Q420, and then cured, to obtain an anti-corrosion composite coating layer.

The coating layer had a thickness of 167 µm.

### Example 9

Example 9 differed from Example 1 in the formulation of the coating. In this embodiment, based on parts by weight, 44 parts of bisphenol A epoxy resin, 2 parts of a Zn-MOF material, 0.8 parts of thiourea, 3 parts of sodium silicate, 8 parts of imidazole, 24 parts of talc powder, and 0.8 parts of benzoin were mixed, and the others were the same as those in Example 1.

### Example 10

Example 10 differed from Example 1 in the formulation of the coating. In this embodiment, based on parts by weight, 35 parts of bisphenol A epoxy resin, 4 parts of a Zn-MOF material, 2 parts of thiourea, 4 parts of sodium silicate, 10 parts of imidazole, 28 parts of talc powder, and 0.6 parts of benzoin were added, and the others were the same as those in Example 1.

### Example 11

Example 11 differed from Example 1 in the formulation of the coating. In this embodiment, based on parts by weight, 42 parts of bisphenol A epoxy resin, 1 part of a Zn-MOF material, 3 parts of sodium silicate, 10 parts of imidazole, 26 parts of talc powder, and 0.6 parts of benzoin were added, and the others were the same as those in Example 1.

### Example 12

Example 12 differed from Example 1 in the formulation of the coating. In this embodiment, based on parts by weight, 42 parts of bisphenol A epoxy resin, 1 part of a Zn-MOF material, 1 part of thiourea, 10 parts of imidazole, 26 parts of talc powder, and 0.6 parts of benzoin were added, and the others were the same as those in Example 1.

### Comparative Example 3

(1) Hydrothermal synthesis of Zn-MOF material: 1 mol of Zn(NO₃)₂ and 2 mol of 2-thiophenecarboxylic acid were fully dissolved in a mixed solution of water and methanol at a ratio of 1: 1, 2 mol of sodium hydroxide was added, and 2 mol of 4,4'-bipyridine was finally added. The mixture reacted in a hydrothermal reactor at 130°C for 12 hours, and the Zn-MOF powder material was finally obtained by washing and drying.
(2) Preparation of epoxy resin composite coating layer: based on parts by weight, 42 parts of bisphenol A epoxy resin, 8 parts of Zn-MOF powder, 10 parts of imidazole, 26 parts of talc powder, and 0.6 parts of benzoin were fully mixed, and then melt-extrusion and sieving were performed on the mixture, to obtain composite coating powder.
(3) The obtained coating powder was electrostatically sprayed onto a surface of alloy steel Q420, and then cured, to obtain an epoxy resin composite coating layer.

The coating layer had a thickness of 167 µm.

### Comparative Example 4

(1) Based on parts by weight, 42 parts of bisphenol A epoxy resin, 10 parts of imidazole, 26 parts of talc powder, and 0.6 parts of benzoin were fully mixed, and then melt-extrusion and sieving were performed on the mixture, to obtain coating powder.
(2) The obtained coating powder was electrostatically sprayed onto a surface of alloy steel Q420, and then cured, to obtain an epoxy resin coating layer.

The thickness of the coating is 167 µm.

### Test Examples

Corrosion resistance of the coating layers in Examples 8 to 12 and Comparative Examples 3 and 4 was evaluated using a cross-scratching test with the method as described below. The prepared coating layer samples were separately taken and subjected to scratching a cross with the consistent dimension on their surfaces. The coating layer samples were placed in a salt spray chamber. After 7 days of the salt spray test, the surfaces of the samples were tested according to the standard of GB/T 10125-2021. The results are shown in Table 3:

**[Table 3]**

| | 7-day salt spray test after scratching a cross on the coating layer |
|---|---|
| Example 8 | No peeling off of the coating layer; very slight corrosion products |
| Example 9 | No peeling off of the coating layer; very slight corrosion products |
| Example 10 | No peeling off of the coating layer; slight corrosion products |
| Example 11 | Peeling off of a small part of the coating layer; a few corrosion products |
| Example 12 | Peeling off of a small part of the coating layer; slight corrosion products |
| Comparative Example 3 | Slight peeling off of the coating layer; obvious corrosion products |
| Comparative Example 4 | Significant peeling off of the coating layer; heavy corrosion products |

The corrosion resistance of the anti-corrosion coating layers was evaluated using the cross-scratching test. For the pure epoxy resin coating layer, significant peeling off thereof and a large quantity of corrosion products on the substrate were observed. For the composite coating layer added with the Zn-MOF material, obvious substrate corrosion products at the cross-scratching part and merely slight peeling off of the coating layer were observed. For the composite coating layer added with the Zn-MOF material and thiourea, the degree of corrosion was relatively low, and merely slight corrosion products appeared at the position where the cross was scratched. For the composite coating layer added with Zn-MOF, thiourea, and sodium silicate, the degree of corrosion was much lower, which can be attributed to a hydrophobic protective film formed on the surface of the alloy steel by interaction between S atoms of small-molecule thiourea and the alloy steel, thereby effectively inhibiting the corrosion of the alloy steel. At the same time, sodium silicate can further cover the active sites of the metal corrosion reactions to form a denser protective layer, thereby synergistically improving the corrosion resistance of the coating layer.

High-temperature resistance and long-term corrosion resistance in Examples 8 to 12 and Comparative Examples 3 and 4 were tested with the method as described below. The coating layer samples were separately taken and immersed in hot water at 95°C for 7 days. Thereafter, the surfaces of the samples (in accordance with GB/T 1733-1993) were observed and electrochemical impedance thereof (in accordance with GB/T 39482-2020) was tested. The results are shown in Table 4.

**[Table 4]**

| | Surface observation | Electrochemical impedance after 7-day immersion in hot water at 95°C |
|---|---|---|
| Example 8 | No bubbling on the surface | 10 Ω to 11 Ω |
| Example 9 | No bubbling on the surface | 10 Ω to 11 Ω |
| Example 10 | Slight bubbling on the surface with a very small number of bubbles | 10 Ω to 10Ω |
| Example 11 | Slight bubbling on the surface with a very small number of bubbles | 10 Ω to 9Ω |
| Example 12 | No bubbling on the surface | 10 Ω to 9Ω |
| Comparative Example 3 | Severe bubbling on the surface with a very large number of bubbles | 10Ω to 7Ω |
| Comparative Example 4 | Severe bubbling on the surface with a very large number of bubbles | 10 Ω to 7Ω |

For the coating layers prepared in Examples and Comparative examples, the initial electrochemical impedance ranged from 10 Ω to 12Ω. After the 7-day immersion in the hot water at 95°C, for the composite coating layer added with Zn-MOF, thiourea and sodium silicate, the corrosion resistance of the coating layer was significantly superior than that of the pure epoxy coating layer and the Zn-MOF material coating layer due to the multi-component synergistic anticorrosive effect.

The preferred embodiments of the present disclosure have been described in detail above, but the present disclosure is not limited to the above embodiments. Those skilled in the art can make various equivalent modifications or substitutions without departing from the spirit of the present disclosure, and all such equivalent modifications or substitutions shall be encompassed by the scope defined by the claims of the present disclosure.

## Claims

1. An anti-corrosion coating, wherein raw material components of the anti-corrosion coating comprise, based on parts by weight:
30 to 44 parts of epoxy resin; and
1 to 10 parts of an azole-functionalized metal-organic framework material.

2. The anti-corrosion coating according to claim 1, wherein the raw material components of the anti-corrosion coating further comprise, based on parts by weight:
1 to 12 parts of a curing agent;
1 to 28 parts of a filler; and
0.1 to 1 part of an adjuvant.

3. The anti-corrosion coating according to claim 2, wherein the raw material components of the anti-corrosion coating comprise, based on parts by weight:
40 to 44 parts of the epoxy resin;
5 to 8 parts of the azole-functionalized metal-organic framework material;
8 to 10 parts of the curing agent;
23 to 26 parts of the filler; and
0.5 to 0.8 parts of the adjuvant.

4. The anti-corrosion coating according to any one of claims 1 to 3, wherein the epoxy resin is selected from at least one of bisphenol A epoxy resin, phenolic epoxy resin, bisphenol F epoxy resin, or bisphenol S epoxy resin.

5. The anti-corrosion coating according to any one of claims 1 to 4, wherein the azole-functionalized metal-organic framework material is selected from at least one of benzotriazole-metal-organic framework material, methylbenzotriazole-metal-organic framework material, benzothiazole-metal-organic framework material, or 2-mercaptobenzothiazole-metal-organic framework material.

6. The anti-corrosion coating according to any one of claims 2 to 5, wherein:
the curing agent is selected from at least one of imidazole, phenylenediamine, diaminodiphenylmethane, aromatic amine E, m-phenylenediamine, or polyamide; and/or
the filler is selected from at least one of talc powder, carbon black, silica, titanium dioxide, mica powder, wollastonite powder, ceramic powder, or glass flakes; and/or
the adjuvant is selected from at least one of a defoamer, a leveling agent, a thixotropic agent, a coupling agent, an anti-settling agent, or a dispersant.

7. A method for preparing an anti-corrosion coating according to any one of claims 1 to 6, the method comprising:
synthesizing a Zn-metal-organic framework material using a hydrothermal process;
synthesizing an azole-functionalized metal-organic framework material by adding an azole ligand to the Zn-metal-organic framework material for a reaction; and
uniformly mixing the azole-functionalized metal-organic framework material with an epoxy resin, and performing melt-extrusion and sieving on the mixture, to obtain the anti-corrosion coating.

8. The method for preparing the anti-corrosion coating according to claim 7, wherein said synthesizing the Zn-metal-organic framework material using the hydrothermal process comprises:
dissolving zinc nitrate and 2-thiophenecarboxylic acid in a mixed solution of water and methanol;
adding sodium hydroxide, followed by 4,4'-bipyridine, into the mixed solution, uniformly mixing, and placing the mixture in a hydrothermal reactor for a reaction at 100°C to 150°C for 8 hours to 16 hours; and
washing and drying, subsequent to the complete reaction, an obtained solid to obtain the Zn-metal-organic framework material.

9. The method for preparing the anti-corrosion coating according to claim 7 or 8, wherein said synthesizing the azole-functionalized metal-organic framework material comprises:
dispersing the Zn-metal-organic framework material in methanol, and adding the azole ligand for a reaction at 40°C to 70°C for 8 hours to 13 hours; and
washing and drying, subsequent to the complete reaction, an obtained solid to obtain the azole-functionalized metal-organic framework material.

10. The method for preparing the anti-corrosion coating according to claim 9, wherein the azole ligand comprises at least one of benzotriazole ligand, methylbenzotriazole ligand, 2-mercaptobenzothiazole ligand, benzimidazole ligand, or benzothiazole ligand.

11. The method for preparing the anti-corrosion coating according to claim 10, wherein the azole-functionalized metal-organic framework material comprises at least one of benzotriazole-metal-organic framework material, methylbenzotriazole-metal-organic framework material, 2-mercaptobenzothiazole-metal-organic framework material, benzimidazole-metal-organic framework material, or benzothiazole-metal-organic framework material.

12. Use of an anti-corrosion coating according to any one of claims 1 to 6 or an anti-corrosion coating prepared by a method according to any one of claims 7 to 11 in anti-corrosion of a metallic substrate.

13. An anti-corrosion coating layer, wherein the anti-corrosion coating layer is obtained by uniformly coating, by means of electrostatic spraying, and curing an anti-corrosion coating according to any one of claims 1 to 6 or an anti-corrosion coating prepared by a method according to any one of claims 7 to 11 on a surface of a metallic substrate.

14. A coated product, comprising:
a metallic substrate; and
an anti-corrosion coating according to any one of claims 1 to 6 or an anti-corrosion coating prepared by a method according to any one of claims 7 to 11, coated on the metallic substrate.

15. The coated product according to claim 14, wherein the metallic substrate comprises an elemental metal or a metallic alloy.
